# DEMANDE DE BREVET EUROPEEN

(11) **EP 1 314 350 A1**
(43) Date de publication de la demande: **28.05.2003**
(21) Numéro de dépôt: 02362020.6
(22) Date de dépôt: 21.11.2002
(51) Int. Cl.: A01G 31/02

(54) **Procédé de culture et de production au sol de fruits, legumes, ou fleurs**

(30) Priorité: 21.11.2001 FR 0115064
(71) Demandeur: Société d'Etudes, de Diffusion, d'Entretien de Materiels, 47320 Bourran (FR)
(72) Inventeur: Bourrousse, Jean-Michel, 47320 Villeneuve Sur Lot (FR); Bourrousse, Franck Stéphane, 47220 Caudecoste (FR)
(74) Mandataire: Thébault, Jean-Louis

(57) **Abrégé**

- L'objet de l'invention est un procédé de culture de plants, notamment de plants de fraisiers, caractérisé en ce qu'il consiste à réaliser les étapes suivantes :

- réalisation d'au moins une butte (12) de terre, comprenant en partie supérieure une table (16),
- aménagement d'un canal (18) longitudinal ouvert dans cette table,
- mise en place d'un film (20), imperméable au moins dans ce canal,
- mise en place au moins de moyens (22) de drainage dans ledit canal,
- dépose de substrats (32) de culture avec des plants sur la table (16).

## Description

La présente invention concerne un procédé de culture et de production de fruits, légumes ou fleurs.

Afin de simplifier la description et de l'illustrer par un exemple typique, le choix est focalisé, de façon non limitative, sur les fraisiers.

Pour cultiver des plants de fraisiers, il existe la solution simple qui consiste à planter des plants dans le sol en rangs. Néanmoins, de nombreux inconvénients sont apparus, notamment le contact des feuilles, des stolons et des fruits avec le sol, les mauvaises herbes qui envahissent le sol et perturbent le rendement. De plus, en cas d'arrosage direct, on constate des pertes d'eau par infiltration dans le sol et non directement consommée par les plants.

Pour y remédier, il est connu depuis longtemps de placer un film de culture en matière plastique sur le sol pour éviter la prolifération de ces mauvaises herbes. Les plants de fraisiers sont implantés dans le sol après avoir perforé ledit film.

Il subsiste encore un problème car les fraises venues à maturité sont au contact du film disposé à plat et lorsqu'il pleut ou que les plants sont arrosés, lesdites fraises baignent dans l'eau résiduelle et accumulée en petites flaques, ce qui n'est pas satisfaisant. De plus, les passe-pieds entre les rangs sont en terre et les maladies se propagent rapidement.

En effet, lorsque la culture est organisée directement au sol, on constate une prolifération des maladies qui requièrent des traitements répétés et coûteux, les sols s'épuisent et il est toujours difficile de maîtriser la fertilisation.

Une culture hors sol a été mise au point pour pallier certains problèmes. Elle consiste à placer des sacs sur des supports en hauteur, 1,30 à 1,50 m au-dessus du sol, et à planter des fraisiers dans les sacs directement, à travers des trous ménagés à cet effet. Les sacs en matière plastique sont aérés, par des micro-perforations par exemple, en sorte de permettre une respiration des plants et les échanges gazeux indispensables. Il y a également une évacuation de l'eau en excès par ces trous ou perforations et un écoulement au sol.

Un arrosage individuel est prévu, avec des compléments nutritionnels si nécessaire.

Un tel procédé permet de récolter aisément les fruits et évite la souillure de ces fruits. De plus, les rendements en production comme au ramassage sont importants, si bien que cela permet de compenser les baisses de prix.

Par contre, ce procédé présente aussi de nombreux inconvénients. En effet, les sacs sont surélevés sur des supports au courant d'air et en cas de froidure prononcée, les plants sont très exposés et peuvent souffrir et pour le moins la production sera retardée. On sait que les premiers fruits sont commercialisés au meilleur prix si bien que tout retard peut être un handicap.

Un tel coup de froid peut aussi modifier la fructification et conférer au fruit des qualités organoleptiques différentes de celles recherchées et pour le moins attendues.

Quand il est prévu un arrosage avec des compléments nutritionnels, l'apport se fait de façon fractionnée mais abondante si bien que le trop-plein est perdu et tombe au sol sauf à prévoir des systèmes de récupération complémentaires qui conduisent à une installation complexe.

Le procédé selon la présente invention propose de pallier ces problèmes avec un agencement qui prend en compte les investissements de culture, la plantation, les traitements, les arrosages, les tailles, les maladies, le ramassage et la préservation des fruits vis-à-vis des maladies et de la pourriture.

A cet effet, le procédé est maintenant décrit selon un mode de réalisation particulier, non limitatif, en regard des dessins annexés qui représentent :
- figure 1, une vue en perspective d'un rang de fraisiers mis en culture selon le procédé,
- figure 2, une vue en coupe de ce même rang,
- figures 3A à 3E, un synoptique des étapes du procédé, et
- figure 4, une vue schématique d'un dispositif permettant la réalisation des différentes étapes.

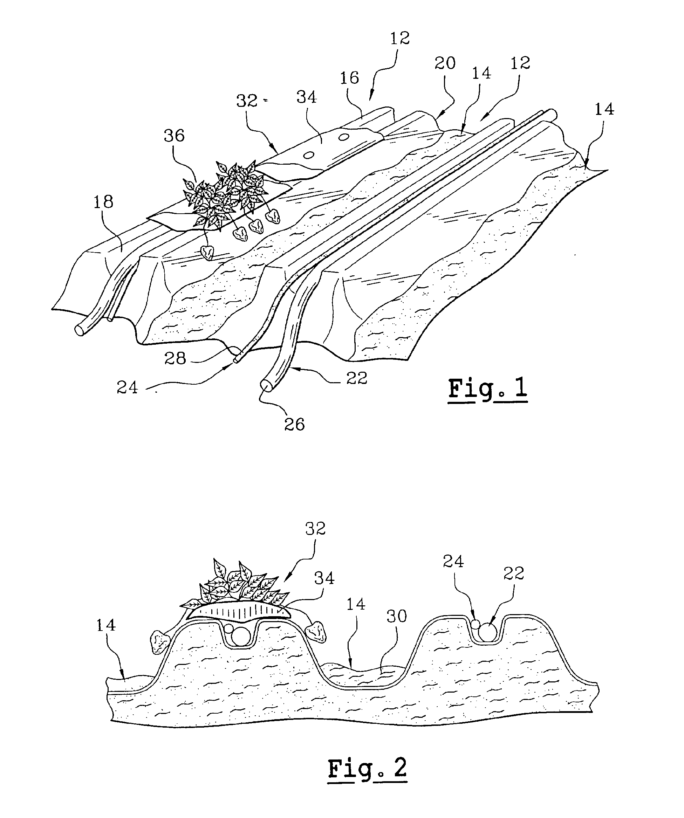

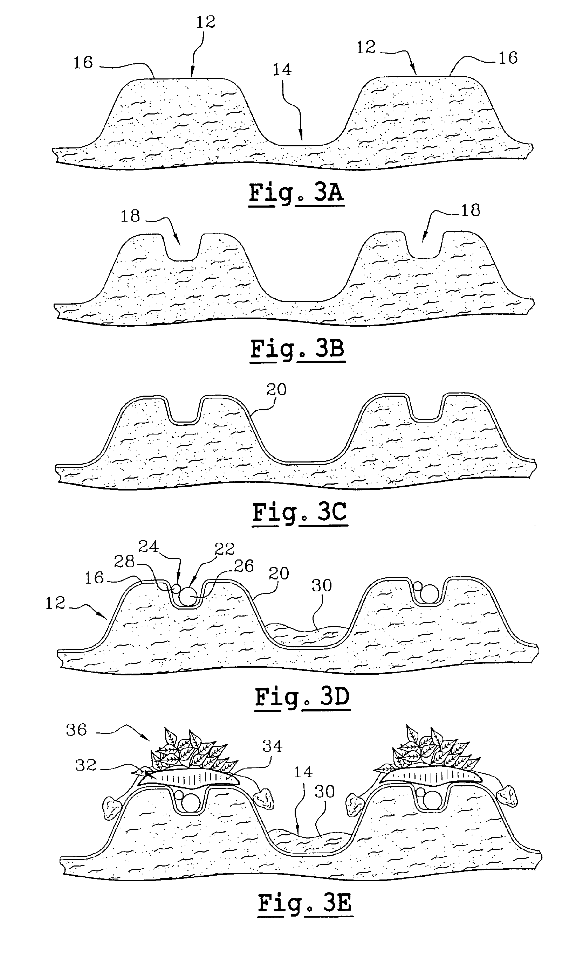

Sur la figure 1, on a représenté deux rangs 10 agencés selon le procédé de mise en culture de l'invention. Ce procédé est maintenant décrit en détail en regard des figures 3A à 3E.

Une étape préalable consiste à préparer un sol de façon connue en agriculture en sorte de l'ameublir et de pouvoir le travailler.

La première étape du procédé consiste à réaliser des buttes 12 de terre, parallèles, séparées par des passe-pieds 14. Ces buttes en section présentent une forme tronquée en partie supérieure pour former une table 16. Ces buttes n'ont qu'un rôle de support et ne servent pas de milieu de culture.

La deuxième étape consiste en une opération de mise en forme avec la réalisation d'un canal 18 longitudinal au milieu de cette table.

La troisième étape consiste à placer un film 20 de culture, imperméable, dans le canal longitudinal au moins, sur l'ensemble de la butte au mieux et éventuellement sur les passe-pieds. Ce film de culture est choisi noir ou blanc suivant que l'on souhaite absorber la chaleur ou la réfléchir. Il est aussi possible de combiner un film blanc pour la culture et un film noir pour les passe-pieds.

Une fois, au moins les buttes 12 recouvertes, il convient d'équiper ces buttes pour réaliser les rangs 10 de culture.

A cet effet, on dispose dans chaque canal 18 longitudinal ouvert, des moyens 22 de drainage et des moyens 24 d'arrosage.

Les moyens 22 de drainage comprennent par exemple un tube 26 perforé, de diamètre suffisamment important pour éviter toute occlusion. De plus, le diamètre suffisant permet d'obtenir une résistance mécanique importante.

Les moyens 24 d'arrosage comprennent un tube 28 d'alimentation de fluides du type utilisé en irrigation. Sur ces tubes, généralement en matière plastique, il est possible de disposer des piquages avec des tubes d'alimentation individuel de chaque plant.

Les dimensions du canal, des tubes 26 et 28 sont telles que les tubes, une fois dans le canal, affleurent la table 16, au moins le tube perforé. Le tube 28 d'alimentation de fluide peut éventuellement être placé en dehors suivant les besoins. Dans tous les cas, il convient que, au moins les moyens de drainage soient au fond du canal longitudinal.

De même, on peut aussi placer un remblais 30 au fond de chaque passe-pied pour ne pas détruire le film sur lequel circulent le personnel d'entretien et les engins de ramassage et de traitement. De plus, ce remblais permet de plomber le film et d'assurer son maintien en place. Le film évite la pousse des mauvaises herbes au milieu des passe-pieds comme sur la butte. Aussi, même si cela n'est pas nécessaire, cette étape est fortement intéressante.

D'autres solutions peuvent être envisagées. On peut couvrir toute une largeur de terrain comprenant plusieurs buttes et plusieurs passe-pieds, on peut mettre dans les passe-pieds des films avec des poches remplies de terre pour assurer un plombage. De nombreuses solutions peuvent être envisagées suivant les besoins et les conditions de culture.

Sur la table, on dispose alors des substrats 32 de culture de plants, en l'occurrence des fraisiers. Ces substrats se présentent, dans le mode de réalisation retenu, sous forme de sacs 34 en matière plastique avec des moyens d'aération, des micro-perforations et/ou des trous, contenant un milieu de culture propice au bon développement et à la production des fraisiers.

On pourrait aussi prévoir des bacs ou des pots.

La dernière étape de mise en place du procédé consiste à disposer les plants 36 à travers des trous ménagés dans les sacs, une fois ces sacs en place sur les tables ou dans les bacs ou encore dans les pots.

La culture et la production sont réalisées de la façon décrite ci-après.

Les plants 36 sont arrosés régulièrement, jusqu'à 10 fois par jour par exemple grâce aux moyens 24 d'alimentation. Chaque piquage alimente un ou plusieurs pieds. On peut aussi prévoir une gaine perforée tous les 10 à 30 cm pour fixer les idées.

Bien que ces arrosages soient programmés et tiennent compte de certains paramètres, il est très difficile de les ajuster en permanence. Aussi, il se produit régulièrement des sur-arrosages et donc des écoulements. Ces volumes en excès sont collectés par les canaux longitudinaux et conduits par les moyens de drainage, en tête de canal. De façon avantageuse, on réalise une pente ou pour le moins, on utilise la déclivité naturelle du terrain pour assurer l'écoulement.

Ces écoulements ne provoquent donc pas de perturbations dans le développement des plants et des fruits qui ne sont jamais en contact avec ces écoulements. Ceci est important car on dispose ainsi d'un des avantages de la culture hors sol.

De plus, les fruits 38 sont un peu plus en hauteur que lorsque les plants sont à même le sol, ce qui limite les efforts et améliore le confort des exploitants. De plus, les fruits se trouvent suspendus de part et d'autre de la butte, prêts à être récoltés, propres.

On remarque aussi que les fluides sont récupérés et peuvent être recyclés pour une nouvelle utilisation. De tels fluides sont en effet des fluides nutritifs, voire incluant des traitements phytosanitaires. Il est nécessaire d'une part de ne pas les diffuser dans la nature pour ne pas modifier l'équilibre naturel et d'autre part de les récupérer compte tenu des coûts de ces produits.

C'est là l'intérêt de cultiver en mettant en oeuvre le procédé selon la présente invention.

Un autre grand intérêt de ce procédé est de disposer des sacs sur des buttes de terre qui agissent comme des régulateurs de température et qui, de toutes les façons, limitent les coups de froid, ce qui est primordial surtout dans le travail en primeur, au début de saison. Les sacs et les plants ne sont pas disposés en plein courant d'air sous serre ou en plein vent.

Dans ce mode de culture, on remarque aussi que l'on peut faire passer des engins dans les passe-pieds comme cela était le cas entre les rangs dans la culture traditionnelle.

Ce procédé permet aussi de cultiver sous serre de grande taille ou sous serre individuelle protégeant chacune un rang, avec un film en matière plastique disposé sur des arceaux.

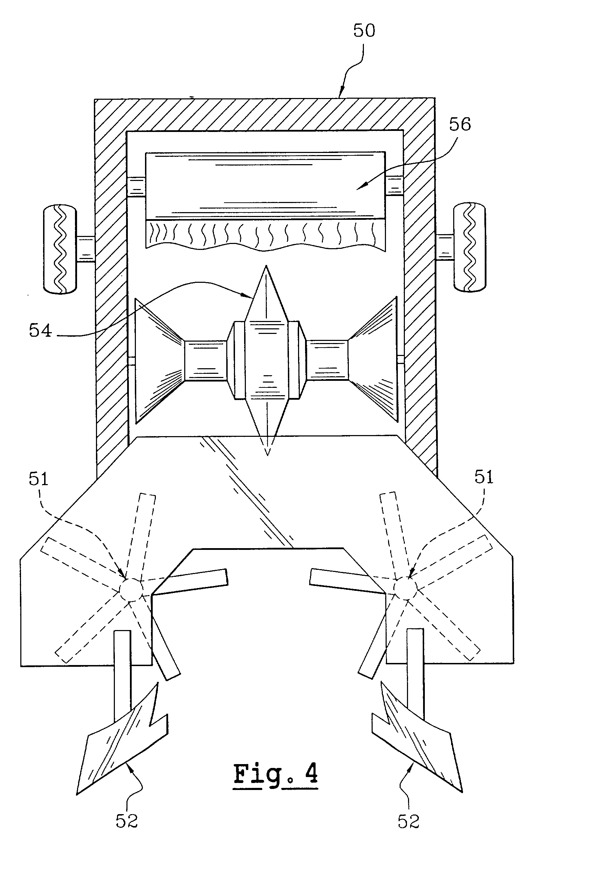

Le dispositif adapté est représenté sur la figure 4, de façon schématique et fonctionnelle. Il peut s'agir d'un dispositif du commerce adapté ou d'une machine tout à fait spéciale.

Cette machine est de préférence du type combinée pour réaliser plusieurs opérations à la fois.

Ainsi, dans le mode de réalisation représenté, le dispositif comprend au moins un châssis 50, avec des moyens 52 du type soc et/ou animés du type rotor 51 pour former une butte, suivis de moyens 54 de conformation.

Ces moyens de conformation consistent en une tôle découpée à la section de la butte complète ou simplement au profil du canal longitudinal à réaliser si la butte est suffisamment formée grâce aux socs et/ou rotors.

On peut adjoindre pour une réalisation en une passe la pose du film à l'aide de moyens 56 de déroulage.

Les opérations supplémentaires indépendantes ou mécanisées peuvent être la pose de moyens de drainage et d'alimentation en fluides, la mise en place des sacs, la plantation des fraisiers ou d'autres plants.

Dans ce cas, des moyens auxiliaires de portage peuvent être utilisés sous forme de chariots par exemple.

De même, pour le ramassage des fruits, les plateaux de barquettes sont disposés sur des chariots circulant à cheval dans les passe-pieds et à disposition des exploitants.

Il découle de cette disposition un avantage très important en ce qui concerne l'entretien des plants. Pendant la vie du plant, il est souvent nécessaire de nettoyer ces plants en retirant les hampes florales ayant produit, les vieilles feuilles. Les opérateurs se baissent moins et disposent néanmoins d'une visibilité parfaite puisqu'ils sont au-dessus des plants et qu'ils peuvent repérer les éléments à éliminer ou les problèmes localisés au coeur de la plante. Ceci n'est pas possible dans la culture hors sol.

On note aussi que, dans le cas de problèmes de température, comme une saison décalée avec une période de froid intense, il est possible de faire circuler de l'air chauffé dans les tubes perforés de drainage afin de tempérer l'environnement immédiat des substrats et de leurs plants. Ceci évite d'avoir à chauffer un volume d'air très important comme dans une serre par exemple. Les calories sont confinées.

Selon une variante, il est aussi possible de prévoir un goutte à goutte avec une ligne de distribution continue et des piquages adaptés, sans modifier quoi que ce soit aux agencements décrits ci-avant et sans faire de concessions aux avantages acquis. Le choix du mode d'arrosage est effectué en fonction des besoins et des conditions.

Le procédé de culture décrit pour les fraises permet ainsi de faire des progrès certains dans la culture des plants de façon général. Pour les cultures de fleurs, de légumes, de plantes aromatiques, on retrouve de façon identique tous les avantages qui viennent d'être énoncés. La mise en oeuvre du procédé est identique.

## Revendications

1. Procédé de culture de plants, notamment de plants de fraisiers, **caractérisé en ce qu'**il consiste à réaliser les étapes suivantes
- réalisation d'au moins une butte (12) de terre, comprenant en partie supérieure une table (16),
- aménagement d'un canal (18) longitudinal ouvert dans cette table,
- mise en place d'un film (20), imperméable, au moins dans ce canal,
- mise en place au moins de moyens (22) de drainage dans ledit canal,
- dépose de substrats (32) de culture avec des plants sur la table (16).

2. Procédé de culture de plants, notamment de plants de fraisiers selon la revendication 1, **caractérisé en ce que** l'on dispose au moins un film de culture imperméable, sur toute la butte.

3. Procédé de culture de plants, notamment de plants de fraisiers. selon la revendication 1 ou 2, **caractérisé en ce que** les moyens de drainage comprennent un tube (26) perforé de diamètre suffisamment important pour éviter toute occlusion et dont le diamètre est tel qu'il affleure la table (16).

4. Procédé de culture de plants, notamment de plants de fraisiers selon l'une quelconque des revendications précédentes, **caractérisé en ce que** l'on dispose des moyens (24) d'alimentation en fluide des plants.

5. Procédé de culture de plants, notamment de plants de fraisiers selon la revendication 4, **caractérisé en ce que** les moyens (24) d'alimentation en fluide sont disposés dans le canal longitudinal (18).

6. Procédé de culture de plants, notamment de plants de fraisiers selon la revendication 4 ou 5, **caractérisé en ce que** les moyens (24) d'alimentation comprennent une alimentation (28) centrale et des piquages.

7. Procédé de culture de plants, notamment de plants de fraisiers selon l'une quelconque des revendications précédentes, **caractérisé en ce que** l'on réalise de part et d'autre de chaque butte un passe-pied recouvert d'un film imperméable.

8. Procédé de culture de plants, notamment de plants de fraisiers selon la revendication 7, **caractérisé en ce que** l'on réalise un remblais (30) sur les passe-pieds.

9. Procédé de culture de plants selon l'une quelconque des revendications précédentes, notamment de plants de fraisiers, **caractérisé en ce que** l'on choisit les films disposés dans le canal et/ou sur la butte et/ou sur les passe-pieds en fonction des besoins d'absorption de la chaleur ou de la résistance mécanique.
